(19) Europäisches Patentamt
European Patent Office
Office européen des brevets

(11) **EP 4 286 251 A1**

(12) **EUROPEAN PATENT APPLICATION**

(43) Date of publication:
**06.12.2023 Bulletin 2023/49**

(21) Application number: **22177187.6**

(22) Date of filing: **03.06.2022**

(51) International Patent Classification (IPC):
**B62D 15/02** (2006.01)

(52) Cooperative Patent Classification (CPC):
**B62D 15/0285**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Valeo Internal Automotive Software
Egypt,
a limited liability company
Giza, Cairo (EG)**

(72) Inventor: **RADWAN, Mohamed
Giza, Cairo (EG)**

(74) Representative: **Hofstetter, Schurack & Partner
Patent- und Rechtsanwaltskanzlei
PartG mbB
Balanstrasse 57
81541 München (DE)**

(54) **VEHICLE PATH PLANNING BASED ON STEERING ANGLES**

(57) According to a method for planning a path (7) for a vehicle (1) based on a predefined final orientation and a predefined final steering angle of the vehicle (1) at a final position (11) of the vehicle (1), an initial orientation of the vehicle (1) and an initial steering angle of the vehicle (1) at an initial position (10) of the vehicle (1) are determined. A curve connecting the initial position (10) and the final position (11) is computed by at least one computing unit (3) of the vehicle (1), wherein the initial orientation, the final orientation, the initial steering angle and the final steering angle are used as boundary conditions. The path (7) is planned by the at least one computing unit (3) to follow the Bezier curve.

Fig.1

EP 4 286 251 A1

**Description**

The present invention is directed to a method for planning a path for a vehicle, to a method for guiding a vehicle at least in part automatically, to an electronic vehicle guidance system and to a computer program product.

Path planning, also denoted as motion planning, is one of the most important sub-function for various applications in automated driving assistance systems or autonomous driving systems at high speed as well as low speed maneuvers.

For example, document US 2019/278298 A1 describes a vehicle with a trajectory controller, which outputs signals operable to control the vehicle such that it follows a trajectory that is determined by the trajectory controller.

Existing approaches for path planning use for example straight lines, circular segments or combinations thereof. In these approaches, the orientation of the vehicle or, in other words, its yaw angle may be taken into account. Apart from the vehicle's orientation, however, it may of advantage to impose demands regarding the steering angle of the vehicle, also denoted as wheel angle of the steerable wheels. Said known approaches are not able to take into account such demands.

This is a drawback since, as a consequence, the steering angle may have to be changed after the vehicle has followed a certain path when it is not moving anymore. Furthermore, when multiple paths are connected and the vehicle is guided along the planned combination of multiple paths, the steering angle has to be adapted accordingly at each path connection point, if it has not been considered already at the level of path planning, which slows down the automatic or semiautomatic guidance of the vehicle.

It is an objective of the present invention to improve path planning for a vehicle such that a predefined initial steering angle and a predefined final steering angle of the vehicle may be realized by means of the planned path.

This objective is achieved by the respective subject-matter of the independent claims. Further implementations and preferred embodiments are subject-matter of the dependent claims.

The invention is based on the idea to plan a path to follow a curve, for example a Bezier curve of at least fifth order, and to use the predefined initial steering angle and the predefined final steering angle as boundary conditions for computing the curve.

According to an aspect of the invention, a method for planning a path for a vehicle, in particular a motor vehicle, for example a truck or a passenger car, based on a predefined final orientation of the vehicle at a final position of the vehicle and based on a predefined final steering angle of the vehicle at the final position of the vehicle. Therein, an initial orientation of the vehicle at an initial position of the vehicle and an initial steering angle of the vehicle at the initial position of the vehicle are determined. A curve connecting the initial position and the final position to each other is computed by at least one computing unit of the vehicle. Therein, the initial orientation, the final orientation, the initial steering angle and the final steering angle are used as boundary conditions for computing the curve. The path is planned by the at least one computing unit to follow the curve.

The curve is for example a polynomial curve, in particular a polynomial curve of at least fifth order. Preferably, the curve is a Bezier curve, in particular a Bezier curve of at least fifth order, for example a Bezier curve of fifth order.

A computing unit may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more applicationspecific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a nonvolatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

The initial position and the final position of the vehicle correspond to respective predefined or predetermined positions of the vehicle. For example, the initial position may correspond to a current position of the vehicle at a time when the computer-implemented method for planning the path is carried out. Alternatively, the initial position may correspond to an intended initial position, for example of an intended driving maneuver for the vehicle. The final position may be an intended final position, for example of the intended driving maneuver for the vehicle.

It is noted that the concept of path planning is not to be confused with the concept of path prediction. While path planning aims at finding a desired path for the vehicle, for example in order to control actuators of the vehicle such that the vehicle actually follows the planned path, path prediction aims at an estimation of which path the vehicle will probably follow based on its actual situation or driving state.

In particular, an initial pose of the vehicle is defined by the initial position of the vehicle in combination with the initial orientation of the vehicle at the initial position. Analogously, a final pose of the vehicle is defined by the final position in combination with the final orientation of the vehicle at the final position. Therein, the initial orientation and the final orientation may be understood as respective orientations of a vehicle coordinate system, which is rigidly connected to the vehicle, with respect to a reference coordinate system, which is rigidly connected to the environment of the vehicle, for example to a road the vehicle is travelling on.

The choice of the orientation of the reference coordinate system is arbitrary but fixed. Therefore, it may for example be chosen to be identical to the vehicle coordinate system according to the initial orientation or the initial pose of the vehicle. The vehicle coordinate system may for example be spanned by the longitudinal axis, the lateral axis and a normal axis of the vehicle, which is perpendicular to the longitudinal axis and the lateral axis. The initial longitudinal and initial lateral axis and the final longitudinal and final lateral axis, respectively, may be understood as the longitudinal axis and the lateral axis of the vehicle according to the initial orientation and the final orientation, respectively, in particular with respect to the reference coordinate system. Therein, the longitudinal axis may for example correspond to a direction of motion of the vehicle in case the steering angle of the vehicle is equal to zero. The plane spanned by the longitudinal axis and the lateral axis may be parallel to a plane spanned by the tire contact points on the road surface.

The initial and final orientations are also predefined or predetermined. For example, the initial orientation may correspond to a current orientation of the vehicle at a time when the computer-implemented method for planning the path is carried out. Alternatively, the initial orientation may correspond to an intended initial orientation, for example of the intended driving maneuver. The final orientation may be an intended orientation, for example of the intended driving maneuver.

The steering angle of the vehicle may be defined directly or indirectly by the angles steerable wheels of the vehicle, for example front wheels, include with the longitudinal axis. For example, in case of a vehicle with two steerable front wheels and two non-steerable rear wheels, a two-wheel model may be employed for describing the motion of the vehicle.

Therein, it is assumed that the vehicle has a single virtual steerable front wheel located at the longitudinal axis and a single non-steerable rear wheel located at the longitudinal axis. The steering angle may then be an angle, the single virtual steerable front wheel includes with the longitudinal axis. This angle may, in general differ slightly from the respective angles, the two actual front wheels of the vehicle include with the longitudinal axis. In fact, the two actual front wheels of the vehicle may include slightly different angles with the longitudinal axis. However, also different models may be used, for example for different types of vehicles. For example, the steering angle may also be defined by a steering wheel angle of the vehicle.

The initial and final steering angles are also predefined or predetermined. For example, the initial steering angle may correspond to a current steering angle of the vehicle at a time when the computer-implemented method for planning the path is carried out. Alternatively, the initial steering angle may correspond to an intended initial steering angle, for example of the intended driving maneuver. The final steering angle may be an intended steering angle, for example of the intended driving maneuver.

Note that, in general, a change in the orientation of the vehicle depends on the steering angle. However, the initial orientation, the final orientation, the initial steering angle and the final steering angle may represent independent boundary conditions for computing the Bezier curve. Further boundary conditions may apply in some implementation, for example a distance between the initial position and the final position may also be predefined and used as a further boundary condition.

Depending on the actual implementation, the initial orientation, the final orientation, the initial steering angle and/or the final steering angle may therefore be determined based on respective sensor data or may be computed by the at least one computing unit or may be specified by other requirements.

It is further noted that the admissible parameter ranges for the initial orientation, the final orientation, the initial steering angle and/or the final steering angle may also be subject to certain restrictions, which may be defined, for example, by maximum or minimum values for the steering angle and/or a rate of change of the steering angle. Corresponding admissibility checks may be involved in some implementations of the method. If it is found, for example, that the restrictions are not met by the initial orientation, the final orientation, the initial steering angle and the final steering angle, it may for example be provided that, in accordance with the method, an error message and/or a prompt for user feedback is output and/or a default setting and/or a predetermined initial state is set. Alternatively, the final orientation, the initial steering angle and/or the final steering angle may be automatically adapted by the at least one computing unit, until the restrictions are met.

The path for the vehicle describes a planned motion of a specific predefined point on the vehicle. For example, the planned path may describe a motion of a point on an axle of the vehicle, for example at a lateral center of the vehicle.

The path may also describe the motion of a point on a front bumper of the vehicle et cetera. In particular, the path corresponds to a two-dimensional curve within a plane, which is, for example, perpendicular to the normal axis of the vehicle. Consequently, the curve, in particular the polynomial curve or Bezier curve, comprises two components, each of the components describing a respective spatial coordinate. Therein, both components of the polynomial curve or Bezier curve may also be considered as respective polynomial curves or Bezier curves, respectively, in particular as a function of an independent parameter t.

For example, the planned path may be given by (x(t), y(t)), wherein t assumes values in a predefined range, for example in the range of [0, 1]. It is noted that the planned path describes only the spatial aspect of the motion of the vehicle. In particular, the actual motion of the vehicle may be described by considering t as a function of time. However, t does not correspond to the time per se.

The Bezier function being of at least fifth order or being of fifth order may be understood such that at least one of the components of the Bezier curve is of at least fifth order or of fifth order, in particular in the independent parameter t.

A Bezier curve may be understood as a function of the independent parameter t, which fulfills the respective Bezier equation according to the order of the Bezier curve, in particular of fifth order.

Using the Bezier curve for the path planning allows to use closed form equations for the path, which may be planned and adapted dynamically in a fast way. Furthermore, for example compared to paths consisting of straight and/or circular segments, an improved smoothness and/or less required steering actions and therefore an improved level of comfort for a user may be achieved.

The use of the Bezier curve enables a robust and dynamic motion planning for the vehicle, especially in situations with limited space, in particular in tight parking situations or other situations, where a collision with an external object shall be avoided. Furthermore, the required calculations to be carried out do not require extensive computational resources and therefore can also be carried out by embedded systems, as commonly used in passenger cars and other motor vehicles. Furthermore, using the Bezier curve allows to plan simple as well as complex paths including S-shaped paths, straight paths or circular paths within short driving distance.

Using the Bezier curve of at least fifth order allows to consider not only the initial and final orientation as predefined boundary conditions but also the initial and final steering angle. This is an advantage with respect to alternative approaches, wherein the path planning aims at planning an admissible path that the vehicle can follow within its steering limits, without taking care of the initial and final steering angle to follow the path. In such approaches, the problem of adjusting the steering angle to follow the planned path is left to the steering controller, which is responsible to make the appropriate steering actions to let the vehicle correctly follow the planned path. Taking into account the initial and final steering angle already for path planning, as in the present invention, computational time during controlling the vehicle along the planned path is reduced.

Moreover, it may be particularly desirable to achieve a certain final steering angle at the end of a driving maneuver. For example, when parking the vehicle, a steering angle of zero may be desired in order to avoid steering while the vehicle is standing still. Also this may be realized by means of the invention. Similarly, when combining two or more paths, the optimum steering angle at the connection point of the paths may be achieved.

Thus, the invention allows for faster and smoother driving maneuvers, for example parking maneuver.

In several implementations, the initial steering angle is different from zero. In particular, the initial steering angle does not correspond to a neutral position or zero position of a steering system of the vehicle.

According to several implementations of the invention, the initial orientation is determined, in particular by the at least one computing unit, based on inertial sensor data generated by an inertial sensor system of the vehicle.

For example, the at least one computing unit may determine a yaw rate and/or a velocity of the vehicle based on the inertial sensor data and determine the initial orientation depending on the yaw rate and a reference orientation of the vehicle according to known methods.

According to several implementations of the invention, the initial steering angle is determined, in particular by the at least one computing unit, based on steering sensor data generated by a steering angle sensor of the vehicle.

For example, the at least one computing unit may determine a position of a steering wheel of the vehicle depending on the steering sensor data and determine the initial steering angle depending on the position of the steering wheel.

According to several implementations, the Bezier curve is computed according to the relations

$$x_p(t) = M\,t\,,$$

$$y_p(t) = 5\,Y_1(1\text{-}t)^4\,t + 10\,Y_2(1\text{-}t)^3\,t^2 + 10\,Y_3(1\text{-}t)^2\,t^3 + 5\,Y_4(1\text{-}t)t^4\,.$$

Therein, $x_p(t)$ describes a first spatial coordinate of the path as a function of the independent parameter t within the interval [0, 1] and $y_p(t)$ describes the second spatial coordinate of the path as a function of the independent parameter t. Further, M denotes a distance, in particular a Euclidian distance, between the initial position and the final position. Furthermore, $Y_1$ is a constant depending on the initial orientation, $Y_2$ is a constant depending on the initial orientation and on the initial steering angle, $Y_3$ is a constant depending on the final orientation and on the final steering angle, and $Y_4$ is a constant depending on the final orientation.

In such implementations, $x_p(t)$ is chosen to depend linearly on t, which greatly simplifies the general Bezier equations in both spatial coordinated, while the fifth order in t is still kept in $y_p(t)$ to allow for the flexibility of the path planning as described above, in particular taking into account the initial and final steering angle.

It is noted that $x_p(t)$ and $y_p(t)$ are coordinates in a local coordinate system, wherein the initial position and the final position both lie on the $x_p$-axis or, in other words, $y_p$ is equal to zero for the initial and final position or, in yet other words, $y_p(t=0) = y_p(t=1) = 0$. If it is desired to have the path in another coordinate system, for example a vehicle coordinate system or a map coordinate system, simple rotations may be used to transform $x_p(t)$ and $y_p(t)$ accordingly.

According to several implementations, $Y_1$, $Y_2$, $Y_3$ and $Y_4$ further depend on the distance M.

According to several implementations, the Bezier curve is computed depending on a driving direction of the vehicle.

For example, in respective implementations, $Y_2$ and $Y_3$ may further depend on a parameter D, which is equal to 1 in case a driving direction of the vehicle is a forward direction and equal to -1 in case the driving direction of the vehicle is a backward direction. In other words, D may be considered to denote a sign corresponding to the driving direction of the vehicle.

According to several implementations, the Bezier curve is computed depending on a wheelbase l of the vehicle.

For example, in respective implementations, $Y_2$ and $Y_3$ may further depend on the wheelbase l.

According to several implementations, $Y_1$ is given by $Y_1 = t_0 \dfrac{M}{5}$, wherein $\tan(\theta_{r0}) = t_0$ and wherein $\theta_{r0}$ denotes the initial orientation.

According to several implementations, $Y_2$ is given by

$$Y_2 = \frac{2\, t_0\, M}{5} + D \frac{T_0\, M^2}{20\, l} \left(1 + t_0^2\right)^{\frac{3}{2}},$$

wherein $\tan(\varphi_{r0}) = T_0$ and wherein $\varphi_{r0}$ denotes the initial steering angle.

According to several implementations, $Y_3$ is given by

$$Y_3 = \frac{-2\, t_f\, M}{5} + D \frac{T_f\, M^2}{20\, l} \left(1 + t_f^2\right)^{\frac{3}{2}}.$$

Therein $\tan(\varphi_{rf}) = T_f$, wherein $\varphi_{rf}$ denotes the final steering angle and $\tan(\theta_{rF}) = t_f$, wherein $\theta_{rF}$ denotes the final orientation.

According to several implementations, $Y_4$ is given by $Y_4 = -t_f \dfrac{M}{5}$.

According to several implementations, a further Bezier curve of at least fifth order, for example of fifth order, connecting the final position and a further final position of the vehicle is computed by the at least one computing unit, wherein the final orientation, a predefined further final orientation, the final steering angle and a predefined further final steering angle are used as boundary conditions. The path is planned by the at least one computing unit to follow the Bezier curve and the further Bezier curve.

The explanation with respect to the Bezier curve, the initial orientation, the final orientation, the initial steering angle and the final steering angle hold analogously for the further Bezier curve, final orientation, the further final orientation, the final steering angle and the further final steering angle.

In such implementations, the steering angle at a position of the path corresponding to an end of the Bezier curve, namely at the final position, is identical to the steering angle at a position of the path corresponding to a start of the further Bezier curve. Consequently, no additional steering is necessary to connect the two portions of the path at the final position.

According to a further aspect of the invention, a method for guiding a vehicle at least in part automatically is provided. Therein, a method for planning a path according to the invention is carried out by the at least one computing unit of the vehicle and the vehicle is guided at least in part automatically to follow the planned path.

According to several implementations of the method for guiding the vehicle at least in part automatically, the vehicle is parked in a parking space by guiding the vehicle at least in part automatically to follow the planned path. In particular, the final position may lie in the parking space.

According to several implementations, the final steering angle is zero.

This may be particularly beneficial in implementations, where the vehicle is parked in the parking space.

According to several implementations, the path is planned by a path planner unit of the at least one computing unit and at least one control signal for guiding the vehicle at least in part automatically to follow the planned path is generated by a controller unit of the at least one computing unit. For example, also the Bezier curve may be computed by the path planner unit.

The at least one control signal may for example be transmitted to one or more actuators of the vehicle, which may affect a lateral and/or longitudinal control of the vehicle depending on the at least one control signal such that the vehicle follows the planned path.

According to a further aspect of the invention, an electronic vehicle guidance system for a vehicle is provided. The electronic vehicle guidance system comprises an inertial sensor system for the vehicle, which is configured to generate inertial sensor data, and at least one computing unit for the vehicle, which is configured to determine an initial orientation of the vehicle at an initial position of the vehicle based on the inertial sensor data. The electronic vehicle guidance system comprises a steering angle sensor for the vehicle, which is configured to generate steering sensor data and the at least one computing unit is configured to determine an initial steering angle of the vehicle at the initial position based on the steering sensor data.

The at least one computing unit is configured to compute a curve, for example a Bezier curve of at least fifth order, connecting the initial position and the final position and to use the initial orientation, the final orientation, the initial steering angle and the final steering angle as boundary conditions. The at least one computing unit is configured to plan a path for the vehicle, which follows the curve.

An electronic vehicle guidance system may be understood as an electronic system, configured to guide a vehicle in a fully automated or a fully autonomous manner and, in particular, without a manual intervention or control by a driver or user of the vehicle being necessary. The vehicle carries out all required functions, such as steering maneuvers, deceleration maneuvers and/or acceleration maneuvers as well as monitoring and recording the road traffic and corresponding reactions automatically. In particular, the electronic vehicle guidance system may implement a fully automatic or fully autonomous driving mode according to level 5 of the SAE J3016 classification. An electronic vehicle guidance system may also be implemented as an advanced driver assistance system, ADAS, assisting a driver for partially automatic or partially autonomous driving. In particular, the electronic vehicle guidance system may implement a partly automatic or partly autonomous driving mode according to levels 1 to 4 of the SAE J3016 classification. Here and in the following, SAE J3016 refers to the respective standard dated June 2018.

Guiding the vehicle at least in part automatically may therefore comprise guiding the vehicle according to a fully automatic or fully autonomous driving mode according to level 5 of the SAE J3016 classification. Guiding the vehicle at least in part automatically may also comprise guiding the vehicle according to a partly automatic or partly autonomous driving mode according to levels 1 to 4 of the SAE J3016 classification.

In particular, the at least one computing unit comprises a path planner unit, which is configured to plan the path and, for example, to compute the Bezier curve, and a controller unit, which is configured to generate at least one control signal for guiding the vehicle at least in part automatically to follow the planned path.

Further implementations of the electronic vehicle guidance system according to the invention follow directly from the various embodiments of the methods according to the invention and vice versa. In particular, individual features and corresponding explanations relating to the various implementations of the methods according to the invention can be transferred analogously to corresponding implementations of the electronic vehicle guidance system according to the invention. In particular, the electronic vehicle guidance system according to the invention is designed or programmed to carry out the method for planning a path according to the invention and/or the method for guiding a vehicle at least in part automatically according to the invention. In particular, the electronic vehicle guidance system according to the invention carries out such a method.

According to a further aspect of the invention, a first computer program comprising first instructions is provided. When the first instructions are executed by a data processing device, for example by a computer system, the first instructions cause the data processing device to carry out a method for planning a path according to the invention.

According to a further aspect of the invention, a second computer program comprising second instructions is provided. When the second instructions are executed by an electronic vehicle guidance system according to the invention, in particular by the at least one computing unit, the second instructions cause the electronic vehicle guidance system to carry out a method for planning a path according to the invention or a method for guiding a vehicle at least in part automatically according to the invention.

According to a further aspect of the invention, a computer readable storage medium is provided, which stores a first computer program and/or a second computer program according to the invention.

The first computer program, the second computer program and the computer readable storage medium may be denoted as respective computer program products comprising the first and/or second instructions, respectively.

For use cases or use situations which may arise in the method and which are not explicitly described here, it may be provided that, in accordance with the method, an error message and/or a prompt for user feedback is output and/or a default setting and/or a predetermined initial state is set.

If it is mentioned in the present disclosure that a component of the electronic vehicle guidance system according to the invention, in particular the at least one computing unit of the electronic vehicle guidance system, is adapted, configured or designed et cetera, to perform or realize a certain function, to achieve a certain effect or to serve a certain purpose, this can be understood such that the component, beyond being usable or suitable for this function, effect or purpose in principle or theoretically, is concretely and actually capable of executing or realizing the function, achieving the effect or serving the purpose by a corresponding adaptation, programming, physical design and so on.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features which go beyond or deviate from the combinations of features set forth in the recitations of the claims may be comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,

Fig. 1    shows a schematic representation of a vehicle with an exemplary implementation of an electronic vehicle guidance system according to the invention;

Fig. 2    shows a schematic illustration of parameters in a two-wheel model;

Fig. 3    shows an example of boundary points and control points of a Bezier curve in global coordinates;

Fig. 4    shows an example of boundary points and control points of a Bezier curve in local coordinates; and

Fig. 5    shows an example of a path planned according to an exemplary implementation of a method according to the invention and further paths for a vehicle.

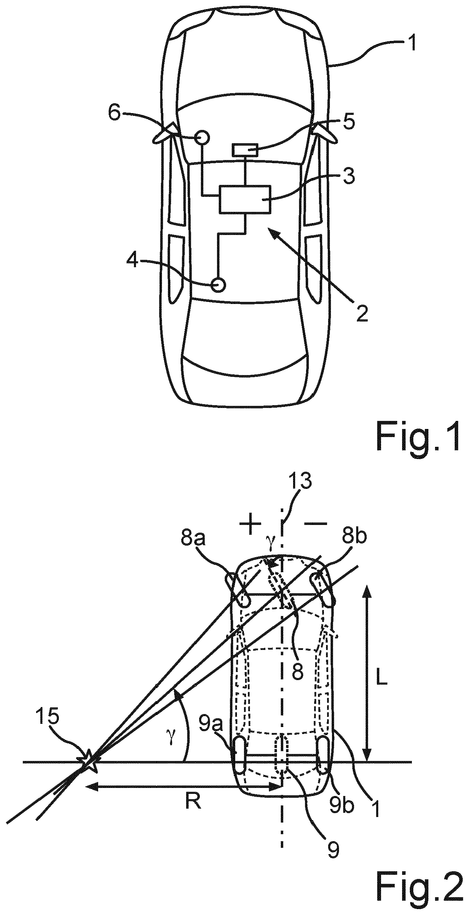

Fig. 1 shows a schematic representation of a vehicle 1 with an exemplary implementation of an electronic vehicle guidance system 2 according to the invention.

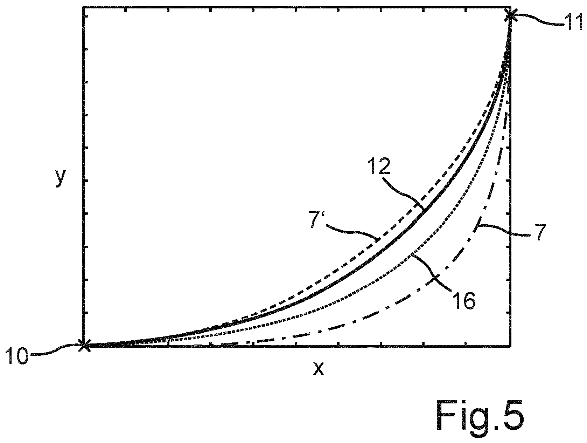

The electronic vehicle guidance system 2 comprises at least one computing unit 3, which may plan a path 7 for the vehicle 1 connecting an initial position 10 of the vehicle 1 to a final position 11 (see Fig. 5), which may also be denoted as target position, based on a predefined final orientation of the vehicle 1 at the final position 11 and a predefined final steering angle of the vehicle 1 at the final position 11. To this end, the at least one computing unit 3, for example a path planner unit (not shown) of the at least one computing unit 3, computes a curve, for example a Bezier curve of at least fifth order, preferably of fifth order, connecting the initial position 10 and the final position 11, wherein an initial orientation of the vehicle 1 at the initial position 10, the final orientation, an initial steering angle of the vehicle 1 at the initial position 10 and the final steering angle are used as boundary conditions.

The initial orientation may for example be determined based on inertial sensor data generated by an inertial sensor system 4 of the vehicle 1. The initial steering angle may for example be determined based on steering sensor data generated by a steering angle sensor 6 of the vehicle 1. The path 7 is planned by the at least one computing unit 3, for example the path planner unit, to follow the Bezier curve. In particular, the path 7 may be given by the Bezier curve or a part of the path 7 may be given by the Bezier curve.

The at least one computing unit 3, for example a controller unit (not shown) of the at least one computing unit 3, may guide the vehicle at least in part automatically to follow the planned path 7.

For example, the electronic vehicle guidance system 2 may comprise an environmental sensor system 5. The environmental sensor system 5 may for example comprise a camera and/or a radar system and/or a lidar system and/or an ultrasonic sensor system. The computing unit 3 may receive input data comprising environmental sensor data generated by the environmental sensor system 5 and may, in some implementations, plan the path 7 depending on the input data and/or guide the vehicle 1 depending on the input data.

The functionality of the electronic vehicle guidance system 2 as well as respective implementations of methods for planning the path 7 according to the invention and methods for guiding the vehicle 1 at least in part automatically according to the invention are explained in more detail in the following with reference to Fig. 2 to Fig. 6.

Fig. 2 shows a schematic illustration of possible definitions of the steering angle φ and the radius of rotation R of the vehicle 1 in a two-wheel model. In particular, Fig. 2 shows a longitudinal axis 13 of the vehicle 1, its two fixed rear wheels 9a, 9b at a rear axle and its two steerable front wheels 8a, 8b at a front axle. The wheelbase I of the vehicle 1 is for example given by the distance between the front axle and the rear axle. For example, the front wheels 8a, 8b may rotate around a common center of rotation 15. Consequently, the respective angles the front wheels 8a, 8b include with the longitudinal axis 13 are, in general, not exactly identical.

In the two wheel model, the front wheels 8a, 8b are represented by a single virtual front wheel 8, which is centered at a point where the longitudinal axis 13 intersects the front axle. Analogously, the rear wheels 9a, 9b are represented by a single virtual rear wheel 9, which is centered at a point where the longitudinal axis 13 intersects the rear axle. The steering angle φ may then be defined as the angle the virtual front wheel 8 or, in other words, the virtual plane of rotation of the virtual front wheel 8, includes with the longitudinal axis 13. The radius of rotation R may be defined as the shortest distance between the center of rotation 15 and the longitudinal axis 13. It is noted that the invention is not restricted to the definitions described with respect to Fig. 2, in particular the definition of the steering angle φ.

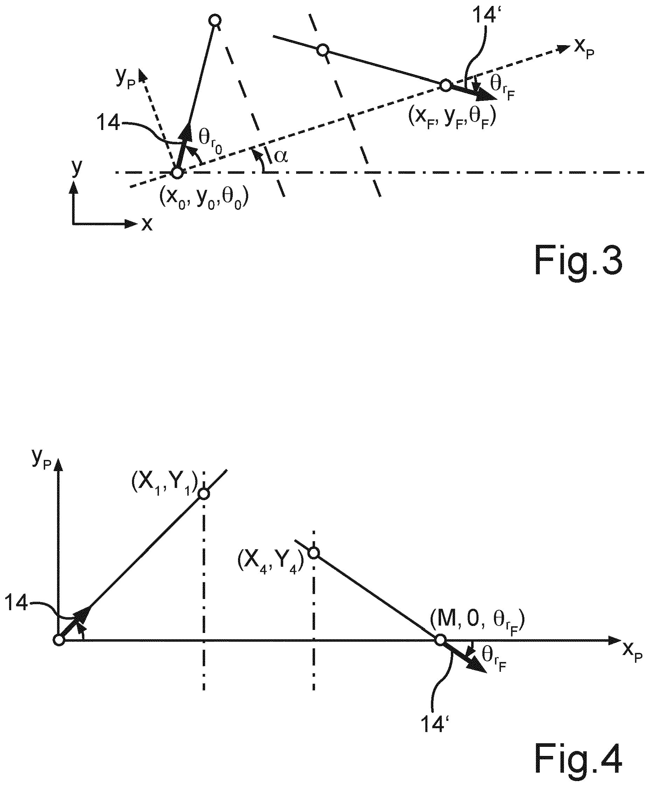

In Fig. 3, the initial position 10 is denoted by $(x_0, y_0)$ and the final position 11 by $(x_F, y_F)$ as shown in Fig. 3. The circles between the initial position 10 and the final position 11 represent the control points of a Bezier curve of fifth order. For simplicity, only two of the four control points between the initial position 10 and the final position 11 are shown.

The Bezier equations of fifth order are particularly suitable to represent the path 7, as they may describe all the most relevant types of paths starting from a straight line to sinusoidallike maneuvers. At the same time, the Bezier equations of fifth order have sufficiently many parameters to be able to fix not only the initial and final orientation but also the initial and final steering angle, as will be demonstrated in the following.

Local coordinates may $(x_p, y_p)$ be used in order to simplify the functional equations. The local coordinate system results from the global coordinate system by a rotation by an angle a, such that in the local coordinates, the initial position as well as the final position lie on the $x_p$-axis, as shown also in Fig. 4. For generating an asymptotic optimal Bezier curve in the local coordinates, it should be noted that input angles in range [0°, 360°[ are normalized to the range [-180°,180°[.

Referring to Fig. 3, one has

$$\alpha = \tan^{-1}\left(\frac{y_F - y_0}{x_F - x_0}\right),$$

$$\text{if } (x_F - x_0) < 0$$
$$\quad \text{if } \alpha > 0$$
$$\quad\quad \alpha = \alpha - 180,$$
$$\quad \text{else}$$
$$\quad\quad \alpha = \alpha + 180,$$

$$\theta_{r_0} = \theta_0 - \alpha \text{ (normalized to the range } [-180°,180°[ \,),$$

$$\theta_{r_F} = \theta_F - \alpha \text{ (normalized to the range } [-180°,180°[ \,),$$

,

$$M = \sqrt{(x_F - x_0)^2 + \left(y_F - y_0\right)^2},$$

$$t_0 = \tan(\theta_{r_0}),$$
$$t_F = \tan(\theta_{r_F}).$$

Considering the orientation 14, 14' of the vehicle 1 given by $t_0$ and $t_F$, respectively, the driving direction may be estimated, see also Fig. 4. Therein, $\theta_{r_0}$ and $\theta_{r_F}$ denote the respective angles of the initial and the final orientation in the local coordinate system, while, $\theta_0$ and $\theta_F$ denote the respective angles of the initial and the final orientation in the global coordinate system. Using a pseudo code notation as follows

$$D = 1$$

$$\text{if } \left(\theta_{r_0} < -90° \ \&\& \ \theta_{r_F} < -90°\right)$$
$$\theta_{r_0} = \theta_{r_0} + 180°,$$
$$\theta_{r_F} = \theta_{r_F} + 180°,$$
$$D = -1$$

$$\text{if } \left(\theta_{r_0} > 90° \ \&\& \ \theta_{r_F} > 90°\right)$$
$$\theta_{r_0} = \theta_{r_0} - 180°,$$
$$\theta_{r_F} = \theta_{r_F} - 180°,$$
$$D = -1$$

$$\text{if } \left(\theta_{r_0} < -90° \ \&\& \ \theta_{r_F} > 90°\right)$$
$$\theta_{r_0} = \theta_{r_0} + 180°,$$
$$\theta_{r_F} = \theta_{r_F} - 180°,$$
$$D = -1$$

$$\text{if } \left(\theta_{r_0} > 90° \ \&\& \ \theta_{r_F} < -90°\right)$$
$$\theta_{r_0} = \theta_{r_0} - 180°,$$
$$\theta_{r_F} = \theta_{r_F} + 180°,$$
$$D = -1$$

$$\text{if } \left(|\theta_{r_0}| \geq 90° \ || \ |\theta_{r_F}| \geq 90°\right)$$
$$\rightarrow \text{ no respective path exists.}$$

Therein, D denotes the driving direction of the vehicle 1, wherein D = 1 corresponds to forward driving and D = -1 corresponds to backward driving.

The Bezier equation of fifth degree may be written in its generic form as follows:

$$[1] \quad r(t) = R_0(1-t)^5 + 5 R_1(1-t)^4 t + 10 R_2(1-t)^3 t^2 + 10 R_3(1-t)^2 t^3 + 5 R_4(1-t)t^4 + R_5 t^5$$

Therein, t is an independent variable in the range [0, 1]. $R_0$ and $R_5$ are the values of r(t=0) and r(t=1), respectively. $R_1$, $R_2$, $R_3$ and $R_4$ are the control points. $R_1$ and $R_4$ are also the values of $\left[\frac{\dot{r}(t=0)}{5}+r(t=0)\right]$ and $\left[r(t=1)-\frac{\dot{r}(t=1)}{5}\right]$, respectively. In order to obtain formulas for the remaining control points, the first and second derivatives for equation [1] are obtained as follows, then corresponding relations are deduced.

$$R_0 = r(t=0)$$

$$R_5 = r(t=1)$$

$$R_1 = R_0 + \frac{\dot{r}(t=0)}{5}$$

$$R_4 = R_5 - \frac{\dot{r}(t=1)}{5}$$

$$\dot{r}(t) = -5R_0(1-t)^4 + 5 R_1(1-t)^4 - 20 R_1(1-t)^3 t - 30 R_2(1-t)^2 t^2 + 20 R_2(1-t)^3 t - 20 R_3(1-t)t^3 + 30 R_3(1-t)^2 t^2 - 5 R_4 t^4 + 20 R_4 (1-t)t^3 + 5 R_5 t^4$$

$$\ddot{r}(t) = 20 R_0(1-t)^3 - 20 R_1(1-t)^3 + 5 R_1(1-t)^4 - 20 R_1(1-t)^3 + 60 R_1(1-t)^2 t + 60 R_2 (1-t) t^2 - 60 R_2(1-t)^2 t - 60 R_2(1-t)^2 t + 20 R_2(1-t)^3 + 20 R_3 t^3 - 60 R_3 (1-t)t^2 - 60 R_3 (1-t)t^2 + 60 R_3 (1-t)^2 t - 20 R_4 t^3 + 20 R_5 t^3$$

$$\ddot{r}(t=0) = 20 (R_0 - 2R_1 + R_2) \rightarrow R_2 = 2R_1 - R_0 + \frac{\ddot{r}(t=0)}{20}$$

$$\ddot{r}(t=1) = 20 (R_5 - 2R_4 + R_3) \rightarrow R_3 = 2R_4 - R_5 + \frac{\ddot{r}(t=1)}{20}$$

$$R_2 = R_0 + \frac{2 \dot{r}(t=0)}{5} + \frac{\ddot{r}(t=0)}{20}$$

$$R_3 = R_5 - \frac{2 \dot{r}(t=1)}{5} + \frac{\ddot{r}(t=1)}{20}$$

By substituting the boundary conditions in the fifth-order Bezier equations for both $x_P(t)$ and $y_P(t)$, the following equations can be obtained.

[2]     $x_p(t) = X_0(1-t)^5 + 5 X_1(1-t)^4 t + 10 X_2(1-t)^3 t^2 + 10 X_3(1-t)^2 t^3 + 5 X_4(1-t)t^4 + X_5 t^5$

[3]     $y_p(t) = Y_0(1-t)^5 + 5 Y_1(1-t)^4 t + 10 Y_2(1-t)^3 t^2 + 10 Y_3(1-t)^2 t^3 + 5 Y_4(1-t)t^4 + Y_5 t^5$

wherein

$$X_0 = 0$$

$$X_1 = \frac{\dot{x}_p(t=0)}{5}$$

$$X_2 = \frac{2\,\dot{x}_p(t=0)}{5} + \frac{\ddot{x}_p(t=0)}{20}$$

$$X_3 = M - \frac{2\,\dot{x}_p(t=1)}{5} + \frac{\ddot{x}_p(t=1)}{20}$$

$$X_4 = M - \frac{\dot{x}_p(t=1)}{5}$$

$$X_5 = M$$

$$Y_0 = 0$$

$$Y_1 = \frac{\dot{y}_p(t=0)}{5}$$

$$Y_2 = \frac{2\,\dot{y}_p(t=0)}{5} + \frac{\ddot{y}_p(t=0)}{20}$$

$$Y_3 = \frac{-2\,\dot{y}_p(t=1)}{5} + \frac{\ddot{y}_p(t=1)}{20}$$

$$Y_4 = \frac{-\dot{y}_p(t=1)}{5}$$

$$Y_5 = 0$$

$$\tan(\theta_{r0}) = t_0 = \frac{\dot{y}_p(t=0)}{\dot{x}_p(t=0)} = \frac{Y_1}{X_1} \ \rightarrow \ Y_1 = t_0\, X_1$$

$$\tan(\theta_{rf}) = t_f = \frac{\ddot{y}_p(t=1)}{\dot{x}_p(t=1)} = \frac{-Y_4}{M-X_4} \rightarrow Y_4 = t_f(X_4-M)$$

$$\tan(\varphi_0) = \left.\frac{l}{R}\right|_{t=0} = \left.\frac{l\,\dot{\theta}}{v}\right|_{t=0} = \left.D\right|_{t=0} * \left.\frac{l\,(\dot{x}_p\,\ddot{y}_p - \ddot{x}_p\,\dot{y}_p)}{(\dot{x}_p^{\,2} + \dot{y}_p^{\,2})^{3/2}}\right|_{t=0}$$

$$\tan(\varphi_f) = \left.\frac{l}{R}\right|_{t=1} = \left.\frac{l\,\dot{\theta}}{v}\right|_{t=1} = \left.D\right|_{t=1} * \left.\frac{l\,(\dot{x}_p\,\ddot{y}_p - \ddot{x}_p\,\dot{y}_p)}{(\dot{x}_p^{\,2} + \dot{y}_p^{\,2})^{3/2}}\right|_{t=1}$$

Assuming for example $x_p(t)=M\,t \rightarrow x_p(t=0)=0$ , $x_p(t=1)=0$ , $\dot{x}_p(t)=M$ , $\ddot{x}_p(t)=0$ , one has

$$X_0 = 0$$

$$X_1 = \frac{M}{5}$$

$$X_2 = \frac{2\,M}{5}$$

$$X_3 = \frac{3\,M}{5}$$

$$X_4 = \frac{4\,M}{5}$$

$$X_5 = M$$

$$\dot{y}_p(t=0) = t_0\,M$$

$$\dot{y}_p(t=1) = t_f\,M$$

$$\tan(\varphi_0) = T_0 = \left.D\right|_{t=0} * \left.\frac{l\,(\dot{x}_p\,\ddot{y}_p - \ddot{x}_p\,\dot{y}_p)}{(\dot{x}_p^{\,2} + \dot{y}_p^{\,2})^{3/2}}\right|_{t=0} = \left.D\right|_{t=0} * \frac{l\,M\,\ddot{y}_p(t=0)}{(M^2 + (t_0\,M)^2)^{3/2}}$$

$$\tan(\varphi_f) = T_f = \left.D\right|_{t=1} * \left.\frac{l\,(\dot{x}_p\,\ddot{y}_p - \ddot{x}_p\,\dot{y}_p)}{(\dot{x}_p^{\,2} + \dot{y}_p^{\,2})^{3/2}}\right|_{t=1} = \left.D\right|_{t=1} * \frac{l\,M\,\ddot{y}_p(t=1)}{(M^2 + (t_f\,M)^2)^{3/2}}$$

$$D|_{t=0} = D|_{t=1} = D$$

$$\ddot{y}_p(t=0) = D * \frac{T_0\,(M^2+(t_0\,M)^2)^{3/2}}{I\,M} = D * \frac{T_0\,M^2}{I}\,(1+t_0^2)^{3/2}$$

$$\ddot{y}_p(t=1) = D * \frac{T_f\,(M^2+(t_f\,M)^2)^{3/2}}{I\,M} = D * \frac{T_f\,M^2}{I}\,(1+t_f^2)^{3/2}$$

$$Y_0 = 0$$

$$Y_1 = t_0\,\frac{M}{5}$$

$$Y_2 = \frac{2\,t_0\,M}{5} + D * \frac{T_0\,M^2}{20\,I}\,(1+t_0^2)^{3/2}$$

$$Y_3 = \frac{-2\,t_f\,M}{5} + D * \frac{T_f\,M^2}{20\,I}\,(1+t_f^2)^{3/2}$$

$$Y_4 = -t_f\,\frac{M}{5}$$

$$Y_5 = 0$$

Therein, $\varphi_0$ denotes the initial steering angle and $\varphi_f$ denotes the final steering angle.

By substitution in equations [2] and [3], the fifth-order polynomial equation presenting the generated path can be obtained as follows

$$x_p(t) = M\,t$$

$$y_p(t) = 5\,Y_1(1-t)^4\,t + 10\,Y_2(1-t)^3\,t^2 + 10\,Y_3(1-t)^2\,t^3 + 5\,Y_4(1-t)t^4$$

Then, the equation of the generated path can be represented in the original global coordinates as follows

$$x = x_0 + x_P\,\cos(\alpha) - y_P\,\sin(\alpha)$$

$$y = y_0 + x_P\,\sin(\alpha) + y_P\,\cos(\alpha)$$

For example, an admissibility check for the steering angle $\varphi$ may be done as follows, wherein $\varphi_{max}$ and $\dot{\varphi}_{max}$ denote a specified maximum value of the steering angle and a specified maximum steering angle change rate, respectively.

$$\tan(\varphi)= \frac{l\,\dot\theta}{v} = \frac{l\,(\dot x_P \ddot y_P - \dot y_P \ddot x_P)}{\left(\dot x_P^{\,2}+ \dot y_P^{\,2}\right)^{3/2}} = \frac{l\,(M\ddot y_P)}{\left(M^2+ \dot y_P^{\,2}\right)^{3/2}} \le \tan(\varphi_{max})$$

$$\dot\varphi= \left[\frac{\left(\dot x_p^{\,2}+ \dot y_p^{\,2}\right)\left(\dot x_p \dddot y_p - \dot y_p \dddot x_p\right) - 3(\dot x_p \ddot y_p - \dot y_p \ddot x_p)(\dot x_p \ddot x_p+ \dot y_p \ddot y_p)}{(\dot x_p^{\,2}+ \dot y_p^{\,2})^3 + l^2(\dot x_p \ddot y_p - \dot y_p \ddot x_p)^2}\right] \times l\,v \le \dot\varphi_{max}$$

$$\dot\varphi= \left[\frac{\left(M^2+ \dot y_p^{\,2}\right)\left(M\dddot y_p\right) - 3M\ddot y_p^{\,2}\dot y_p}{(M^2+ \dot y_p^{\,2})^3 + l^2(M\ddot y_p)^2}\right] \times l\,v \le \dot\varphi_{max} \, .$$

From Fig. 5, one can see how considering the initial and final steering angles in the path planning may be leveraged to increase variety and optimality of the generated paths.

In Fig. 5, several paths are plotted connecting the initial position 10 and the final position 11. The paths 7, 7' are planned according to an exemplary implementation of the method according to the invention by using a fifth order Bezier curve taking into account initial and final steering angles as boundary conditions. The initial and final steering angles are zero for path 7 and non-zero, for example maximum, for path 7'.

The path 7 requires more space due to the zero steering angles at the boundaries, while the path 7' takes a larger curvature and lower distance due to the sharp steering at the boundaries. The initial and final steering angles also affect the smoothness of the generated path and the proper specification of boundary wheel angels may allow for optimal paths with less driving distances.

For comparison, a simple circular arc is shown as path 12 and a third order polynomial as path 16 without taking into account the initial and final steering angles.

**Claims**

1.  Method for planning a path (7) for a vehicle (1) based on a predefined final orientation of the vehicle (1) and a predefined final steering angle of the vehicle (1) at a final position (11) of the vehicle (1), wherein

    - an initial orientation of the vehicle (1) and an initial steering angle of the vehicle (1) at an initial position (10) of the vehicle (1) are determined;
    - a curve connecting the initial position (10) and the final position (11) is computed by at least one computing unit (3) of the vehicle (1), wherein the initial orientation, the final orientation, the initial steering angle and the final steering angle are used as boundary conditions; and
    - the path (7) is planned by the at least one computing unit (3) to follow the curve.

2.  Method according to claim 1, wherein

    - the initial orientation is determined based on inertial sensor data generated by an inertial sensor system (4) of the vehicle (1); and/or
    - the initial steering angle is determined based on steering sensor data generated by a steering angle sensor (6) of the vehicle (1).

3.  Method according to one of claims 1 or 2, wherein the curve is computed as a Bezier curve, in particular a Bezier curve of at least fifth order.

4.  Method according to claim 3, wherein

    - the Bezier curve is computed according to the relations

$$x_p(t) = M\,t \, ,$$

$$y_p(t) = 5\,Y_1(1\text{-}t)^4\,t + 10\,Y_2(1\text{-}t)^3\,t^2 + 10\,Y_3(1\text{-}t)^2\,t^3 + 5\,Y_4(1\text{-}t)t^4\,;$$

- M denotes a distance between the initial position (10) and the final position (11);
- $x_p(t)$ describes a first spatial coordinate of the path (7) as a function of an independent parameter t within the interval [0, 1] and $y_p(t)$ describes a second spatial coordinate of the path (7) as a function of the independent parameter t;
- $Y_1$ is a constant depending on the initial orientation;
- $Y_2$ is a constant depending on the initial orientation and on the initial steering angle;
- $Y_3$ is a constant depending on the final orientation and on the final steering angle; and
- $Y_4$ is a constant depending on the final orientation.

5. Method according to one of claims 3 or 4, wherein the Bezier curve is computed depending on a predefined wheelbase of the vehicle (1).

6. Method according to one of claims 3 to 5, wherein the Bezier curve is computed depending on a driving direction of the vehicle (1).

7. Method according to claim 4, wherein

- $Y_1$ is given by $Y_1 = t_0\dfrac{M}{5}$ , wherein $\tan(\theta_{r0}) = t_0$ and wherein $\theta_{r0}$ denotes the initial orientation; and/or
- $Y_2$ is given by

$$Y_2 = \frac{2\,t_0\,M}{5} + D\,\frac{T_0\,M^2}{20\,I}\,\left(1 + t_0^2\right)^{\frac{3}{2}},$$

wherein $\tan(\varphi_{r0}) = T_0$, wherein $\varphi_{r0}$ denotes the initial steering angle, I denotes a predefined wheelbase of the vehicle (1) and D denotes a sign corresponding to a driving direction of the vehicle (1); and/or
- $Y_3$ is given by

$$Y_3 = \frac{-2\,t_f\,M}{5} + D\,\frac{T_f\,M^2}{20\,I}\,\left(1 + t_f^2\right)^{\frac{3}{2}},$$

wherein $\tan(\varphi_{rf}) = T_f$ , wherein $\varphi_{rf}$ denotes the final steering angle and $\tan(\theta_{rF}) = t_f$, wherein $\theta_{rF}$ denotes the final orientation; and/or
- $Y_4$ is given by $Y_4 = -t_f\dfrac{M}{5}$ .

8. Method according to one of claims 3 to 7, wherein

- a further Bezier curve of at least fifth order connecting the final position (11) and a further final position of the vehicle (1) is computed by the at least one computing unit (3), wherein the final orientation, a predefined further final orientation, the final steering angle and a predefined further final steering angle are used as boundary conditions;
- the path (7) is planned by the at least one computing unit (3) to follow the Bezier curve and the further Bezier curve.

9. Method for guiding a vehicle (1) at least in part automatically, wherein

- a method for planning a path (7) is carried out by the at least one computing unit (3) of the vehicle (1); and
- the vehicle (1) is guided at least in part automatically to follow the planned path (7).

10. Method according to claim 9, wherein

- the vehicle (1) is parked in a parking space by guiding the vehicle (1) at least in part automatically to follow the planned path (7); and/or
- the initial steering angle is different from zero; and/or
- the final steering angle is zero.

11. Method according to one of claims 9 or 10, wherein

- the path (7) is planned by a path planner unit of the at least one computing unit (3); and
- at least one control signal for guiding the vehicle (1) at least in part automatically to follow the planned path (7) is generated by a controller unit of the at least one computing unit (3).

12. Electronic vehicle guidance system (2) for a vehicle (1), wherein

- the electronic vehicle guidance system (2) comprises an inertial sensor system (4) for the vehicle (1), which is configured to generate inertial sensor data, and at least one computing unit (3) for the vehicle (1), which is configured to determine an initial orientation of the vehicle (1) at an initial position (10) of the vehicle (1) based on the inertial sensor data;
- the electronic vehicle guidance system (2) comprises a steering angle sensor (6) for the vehicle (1), which is configured to generate steering sensor data and the at least one computing unit (3) is configured to determine an initial steering angle of the vehicle (1) at the initial position (10) based on the steering sensor data;
- the at least one computing unit (3) is configured to compute a curve connecting the initial position (10) and the final position (11) and to use the initial orientation, the final orientation, the initial steering angle and the final steering angle as boundary conditions; and
- the at least one computing unit (3) is configured to plan a path (7) for the vehicle (1), which follows the curve.

13. Electronic vehicle guidance system (2) according to claim 12, wherein the at least one computing unit (3) comprises

- a path planner unit, which is configured to plan the path (7); and
- a controller unit, which is configured to generate at least one control signal for guiding the vehicle (1) at least in part automatically to follow the planned path (7).

14. Computer program product comprising instructions, which, when executed by a data processing device, cause the data processing device to carry out a method according to one of claims 1 to 8.

15. Computer program product comprising instructions, which, when executed by an electronic vehicle guidance system (2) according to one of claims 12 or 13, cause the electronic vehicle guidance system (2) to carry out a method according to one of claims 1 to 11.

Fig.1

Fig.2

Fig.3

Fig.4

Fig.5

Europäisches
Patentamt

European
Patent Office

Office européen
des brevets

# EUROPEAN SEARCH REPORT

Application Number

EP 22 17 7187

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/204296 A1 (UNIV OHIO [US]) 24 October 2019 (2019-10-24) | 1,2,9-15 | INV. B62D15/02 |
| Y | * paragraphs [0002], [0087], [0115], [0116], [0133], [0148], [0192]; claims; figures * | 3-8 | |
| X | EP 1 491 425 A2 (TOYOTA MOTOR CO LTD [JP]; AISIN SEIKI [JP]) 29 December 2004 (2004-12-29) * paragraphs [0007], [0010], [0019], [0020], [0021], [0028], [0031], [0035], [0036], [0042], [0043], [0051], [0060]; claims; figures * | 1,9, 12-15 | |
| Y | CN 113 335 270 A (UNIV HUNAN; CRRC ZHUZHOU INST CO LTD) 3 September 2021 (2021-09-03) * paragraph [0062]; claims; figures * | 3-8 | |

TECHNICAL FIELDS SEARCHED (IPC)

B62D

The present search report has been drawn up for all claims

| Place of search | Date of completion of the search | Examiner |
|---|---|---|
| The Hague | 1 November 2022 | Ducher, Alban |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 7187

This annex lists the patent family members relating to the patent documents cited in the above-mentioned European search report.
The members are as contained in the European Patent Office EDP file on
The European Patent Office is in no way liable for these particulars which are merely given for the purpose of information.

01-11-2022

| Patent document cited in search report | | Publication date | Patent family member(s) | | Publication date |
|---|---|---|---|---|---|
| WO 2019204296 | A1 | 24-10-2019 | US 2021163068 | A1 | 03-06-2021 |
|  |  |  | WO 2019204296 | A1 | 24-10-2019 |
| EP 1491425 | A2 | 29-12-2004 | CN 1577198 | A | 09-02-2005 |
|  |  |  | DE 602004005264 | T2 | 22-11-2007 |
|  |  |  | EP 1491425 | A2 | 29-12-2004 |
|  |  |  | JP 3818654 | B2 | 06-09-2006 |
|  |  |  | JP 2005014780 | A | 20-01-2005 |
|  |  |  | US 2004267423 | A1 | 30-12-2004 |
| CN 113335270 | A | 03-09-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019278298 A1